# EUROPÄISCHE PATENTSCHRIFT

(11) **EP 1 035 939 B1**
(45) Veröffentlichungstag und Bekanntmachung des Hinweises auf die Patenterteilung: **21.05.2003**
(21) Anmeldenummer: 98962316.0
(22) Anmeldetag: 03.11.1998
(51) Int. Cl.: B23K 1/008

(54) **LÖTVORRICHUTNG MIT EINER GASVERTEILUNG**
SOLDERING DEVICE WITH A GAS DISTRIBUTION SYSTEM
APPAREIL DE BRASAGE AVEC UN SYSTEME DE DISTRIBUTION DE GAZ

(30) Priorität: 07.11.1997 DE 19749185
(43) Veröffentlichungstag der Anmeldung: 20.09.2000
(73) Patentinhaber: MESSER GRIESHEIM GMBH, 60270 Frankfurt (DE)
(72) Erfinder: SCHELLEN, Ralph, D-47800 Krefeld (DE); TAUCHMANN, Jens, D-13189 Berlin (DE)
(86) Internationale Anmeldenummer: EP9806964
(87) Internationale Veröffentlichungsnummer: WO99024209

(56) Entgegenhaltungen:
- EP-A- 0 527 522
- WO-A-94/06593
- US-A- 5 440 101

## Beschreibung

Die Erfindung betrifft eine Lötvorrichtung zum Löten von Flachbaugruppen mit einer mindestens einen Lotbehälter abdeckenden Ummantelung, durch die Flachbaugruppen transportiert und während ihres Transportes mit einer Lotwelle in Kontakt gebracht werden und mit einer Gasverteilung zum Einlassen und Verteilen von einem nicht oxidierenden Gas in die Ummantelung.

Bei der Inertisierung von Wellenlötanlagen werden unterschiedlich ausgebildete und angeordnete Systeme zur Gasverteilung eingesetzt. Sie haben die Aufgabe, die Ummantelung des Lotbehälters zu inertisieren und damit die Qualität der Lötverbindungen den gewachsenen Anforderungen anzupassen. Mit dem Einsatz von Schutzgasen, insbesondere Stickstoff, können die Prozeßfenster hinreichend vergrößert werden, die Benetzung verbessert und die Krätzebildung reduziert werden.

Dabei wird über gebündelte, ausrichtbare Gasströme eine Ringströmung erzeugt, die die Transportbahn der zu verlötenden Flachbaugruppen quert (DE 42 19 913 A1). In der EP 0 500 135 B1 geschieht die Gaszufuhr vorzugsweise mit einer begrenzten Rate, um aus den Gasverteilern in einer laminaren Strömung herauszufließen. Da die den Lotbehälter umschließende Haube so kurz ausgeführt ist, daß der vorangehende Teil einer Leiterplatte mit der Lotwelle in Kontakt kommen kann, während der nachfolgende Teil aus der Einlaßöffnung herausragt, führen erste und zweite Gasverteiler nicht oxidierende Gase zu, die eine Atmosphäre für die Unterund die Oberseite einer eintretenden Leiterplatte und das in Verbindung bringen mit einer Lotwelle bereitstellen. Ähnlich dazu kann der vorangehende Teil einer Leiterplatte aus der Auslaßöffnung herausragen, während sich der nachfolgende Teil in der Lotwelle befindet. Daher führen zweite und dritte Gasverteiler nicht oxidierende Gase entsprechend zu. In der DE 41 42 436 A1 wird dagegen oberhalb der Flachbaugruppen ein Diffuser angeordnet.

Alle derzeitigen Gasverteilungen basieren auf einfachen Systemen der Gasverteiler. Das Schutzgas gelangt über Gaszuführungen zu dem Gasverteiler und wird über Poren (Sintermetalle oder Keramik) gemäß der DE 41 42 436 A1 oder Rohröffnungen gemäß der EP 0 500 135 B1 der Ummantelung zugeführt. Gasverteiler, die nur eine Kammer mit Poren aufweisen, haben keine homogene Verteilung des Schutzgases über den Poren. Gasverteiler mit Bohrungen oder Schlitzen an der Oberfläche setzen das Schutzgas über die Ausbildung eines Freistrahles frei. Dabei kommt es zu einer gerichteten Strömung. Aufgrund des Freistrahlprinzips wird die Umgebungsatmosphäre angesaugt. Dies führt zu gerichteten Strömungen und Turbulenzen in der Ummantelung und als Folge dieser gerichteten Strömungen oder Turbulenzen, erfolgt eine Vermischung des Schutzgases mit Sauerstoff, und die benötigte Schutzgasmenge zur Erreichung eines geforderten Restsauerstoffwertes wird entsprechend größer. Der in der EP 0 500 135 B1 dargestellte Gasverteiler besteht aus einem Gasversorgungsrohr, wobei über die Gaszufuhr mit einer begrenzten Rate eine laminare Strömung aus dem Gasverteiler herausfließen soll um eine Freistrahlbildung zu unterdrücken. Dies führt zu langen Flutungszeiten der Ummantelung und zu langen Reaktionszeiten beim Eindringen von Sauerstoff in die Ummantelung.

Der in der DE 41 42 436 A1 vorgeschlagene Diffuser aus Sintermetall erzeugt zwar keine gerichtete Strömung, gibt das Schutzgas dafür in alle Richtungen ab. Darüber hinaus sind Sintermetallkörper anfällig gegenüber Verschmutzungen.

Der Erfindung liegt die Aufgabe zugrunde, ein mit einer Gasversorgung verbundene Gasverteilung zu schaffen, mittels der große Schutzgasmengen flächig verteilt in der Ummantelung eingebracht werden können.

Diese Aufgabe wird erfindungsgemäß dadurch gelöst, daß die Gasverteilung mindestens einen oberhalb und mindestens einen unterhalb der durch den Transport der Flachbaugruppen definierten Ebene angeordneten Gasverteiler aufweist, die mit Strömungsmitteln und zum Lotbehälter gerichteten Austrittsflächen versehen sind.

Dadurch, daß die Gasverteilung mindestens einen oberhalb und mindestens einen unterhalb der Flachbaugruppen angeordneten Gasverteiler aufweist, die über die zum Lotbehälter gerichteten Austrittsflächen Verdrängungsgaspolster ausbilden, werden zwei Verdrängungsgaspolster in Richtung des Lotbehälter und damit des Lotbades erzeugt. Das von dem unterhalb der Flachbaugruppen angeordneten Gasverteiler erzeugte Verdrängungsgaspolster erfährt aufgrund des erwärmten Lotes eine thermische Umlenkung. Dem aus dem unterhalb der Flachbaugruppen aufsteigenden Verdrängungsgaspolster wird ein aus dem anderen Gasverteiler in Richtung des Lotbades austretendes Verdrängungsgaspolster entgegengesetzt, was eine Zirkulation unterbindet. Dabei vermischen sich die beiden Verdrängungsgaspolster und es findet ein Temperaturausgleich statt. Durch die Bildung von zwei in Richtung zum Lotbad aus den Gasverteilern austretenden Verdrängungsgaspolstern werden Restsauerstoffgehalte < 1000 ppm in < 3 Minuten, vorzugsweise < 2, erreicht.

Dadurch, daß die Gasverteiler eine mit der Gasversorgung verbundene erste Entspannungskammer aufweisen, die über mindestens eine Öffnung mit mindestens einer weiteren Entspannungskammer verbunden ist, in der die Austrittsflächen für die Verdrängungsgaspolster vorgesehen sind, wird der eintretende Gasstrom in der ersten Kammer entspannt und der Druck reduziert. Aufgrund der sich aufbauenden Druckdifferenz zwischen Eingangsdruck und Erstkammerdruck verteilt sich das Schutzgas homogen über die gesamte Entspannungskammer der Gasverteiler. Beim Austritt durch die Öffnungen der ersten Entspannungskammer wird der Druck des Schutzgases weiter reduziert und in die zweite Entspannungskammer entspannt. Das größere Volumen der zweiten Entspannungskammer erlaubt die Reduzierung der Strömungsgeschwindigkeit und des Druckes. Des weiteren dient sie der Beruhigung und der Verteilung des Schutzgasstromes, vorzugsweise des Stickstoffstromes.

Dadurch, daß die Öffnung in einer zum Eingang der Gasversorgung im wesentlichen rechtwinkeligen Richtung ausgebildet ist, erfolgt die weitere Entspannung des Schutzgases, eine Reduzierung der Strömungsgeschwindigkeit und die Umwandlung von Strömungsenergie, da den Öffnungen der ersten Entspannungskammer eine Wand der zweiten Entspannungskammer gegenübersteht, so daß der gerichtete Schutzgasstrom auf diese Wand trifft und die Strömung somit gebrochen und auf den Raum verteilt wird. Vorteilhaft wird durch die Verwendung von mehreren Entspannungskammern und der entsprechenden Anordnung von mehreren Öffnungen zwischen der ersten und zweiten Entspannungskammer eine gleichmäßige Verteilung über die gesamte Länge des Gasverteilers erreicht. Dabei werden evtl. verbleibende Inhomogenitäten in der Druckverteilung der ersten Entspannungskammer über die Verteilung der Anzahl und die Größe (Querschnitt) der Öffnungen ausgeglichen.

Eine im wesentlichen rechtwinklig oder gegenüberliegend zur Strömungsrichtung der Öffnungen der ersten Entspannungskammer angeordnete schlitzförmige Austrittsfläche ermöglicht den Austritt des Verdrängungsgaspolsters. Die Gasverteiler erstrecken sich mindestens über die Länge des Lotbehälters, wobei die schlitzförmigen Austrittsflächen über die gesamte Länge der Gasverteiler ausgeführt sind und Verdrängungsgaspolster erzeugen, die nach dem Austritt aus der Austrittsfläche den Abmessungen der schlitzförmigen Austrittsflächen entsprechen und sich nahezu nicht mit der umgebenden Atmosphäre vermischen.

Dadurch, daß der unter den Flachbaugruppen angeordnete Gasverteiler mindestens die Lotwelle umgibt, wird ein Verdrängungsgaspolster an der Stelle erzeugt, an der das Schutzgas primär vorhanden sein muß, wobei durch die Anordnung über dem erwärmten Lot das Verdrängungsgaspolster unmittelbar thermisch umgelenkt wird.

Bei dem unter den Flachbaugruppen angeordneten Gasverteiler, der mindestens die Lotwelle umgibt, ist die erste Entspannungkammer mit Abstand in der zweiten Entspannungskammer angeordnet und die Öffnung, bzw. die Öffnungen der ersten Entspannungskammer münden in Richtung zu den Flachbaugruppen in die zweite Entspannungskammer. Den Öffnungen steht somit eine Wand der zweiten Entspannungskammer gegenüber, so daß der gerichtete und gebündelte Schutzgasstrom auf diese Wand trifft und die Strömung somit gebrochen und auf den Raum geteilt wird. Die Öffnungen variieren so in der Anzahl und Größe (Querschnitt) über die Länge des Gasverteilers, daß eine homogene Gasverteilung in der zweiten Entspannungskammer erzielt wird. Das entspannte und über die U-förmig ausgebildete zweite Entspannungskammer verteilte Schutzgas kann nun den Gasverteiler an der der Öffnung gegenüberliegenden Unterseite über beidseitig zur ersten Entspannungskammer angeordnete schlitzförmige Austrittsflächen verlassen. Die schlitzförmigen Austrittsflächen sind im Bezug auf die Abmessungen der zweiten Entspannungskammer nicht verengt. Die U-förmig ausgebildete zweite Entspannungskammer wird an der offenen Seite durch die erste Entspannungskammer begrenzt, wobei der Zwischenraum die zweite Entspannungskammer bildet.

Vorteilhafte Weiterbildungen sind in den Unteransprüchen angegeben.

Ein Ausführungsbeispiel der Erfindung ist in der Zeichnung dargestellt und wird im folgenden näher beschrieben:

Es zeigen
- Figur 1: eine schematische Darstellung einer Ummantelung eines Lotbehälters mit einer Gasverteilung
- Figur 2: eine schematische Draufsicht des unter den Flachbaugruppen angeordneten Gasverteilers
- Figur 3: eine schematische Schnittdarstellung des Gasverteilers der Figur 2
- Figur 4: eine schematische Längsschnittdarstellung eines Ausschnittes des in Figur 2 dargestellten Gasverteilers
- Figur 5: eine schematische Darstellung des über den Flachbaugruppen angeordneten Gasverteilers
- Figur 6: einen Schnitt AA entlang der in Figur 5 eingezeichneten Schnittlinie

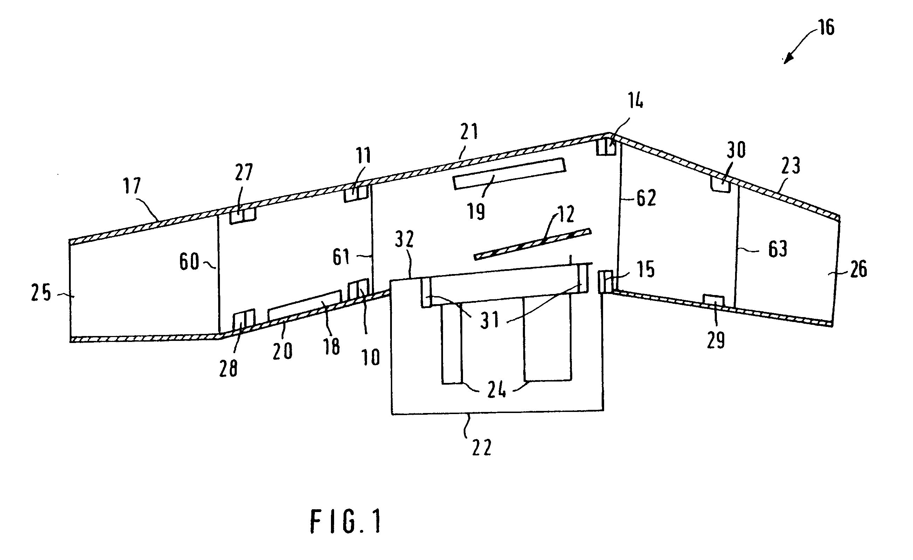

In Figur 1 ist eine Lötvorrichtung 16 im Schnitt schematisch dargestellt, die im wesentlichen aus einem Vortunnel 17, einem Eingangstunnel 20 der Heizmittel 18 umfassen kann, einer den Lotbehälter 22 umgebenden Haube 21 und einem Auslauftunnel 23 besteht. Unter Ummantelung wird im vorliegenden Fall mindestens die den Lotbehälter 22 abdeckende Haube 21 verstanden. Die Lotwelle ist mit 24 und eine Leiterplatte mit 12 bezeichnet. Die Leiterplatte 12 wird durch die Ummantelung 17, 20, 21 und 23 transportiert und während ihres Transports durch die Ummantelung mit einer Lotwelle 24 in dem Lotbehälter 22 in Kontakt gebracht. Die Ummantelung enthält einen Einlaß 25 auf einer Einlaßseite und einen Auslaß 26 für die Flachbaugruppen auf einer Auslaßseite. Der Ein- und Auslaß 25, 26 wird vorzugsweise durch Klappen 60, 61, 62, 63 und Gasvorhänge von der Umgebung abgeschirmt. Die Düsen 10, 11, 14, 15, 27, 28, 29, 30 sind als Spaltdüsen ausgelegt, die schmale Gasstrahlen erzeugen. In Figur 1 sind jeweils zwei den Ein- und Auslaß abdichtende Klappen 60, 61 und 62, 63 und Gasvorhänge erzeugende Düsen 10, 11, 27, 28 und 14, 15, 29, 30, die Schleusen bilden, vorgesehen. Es ist selbstverständlich auch eine Ausbildung mit nur einer Klappe 61 bzw. 62 und einem Gasvorhang 10, 11 bzw. 14, 15 möglich.

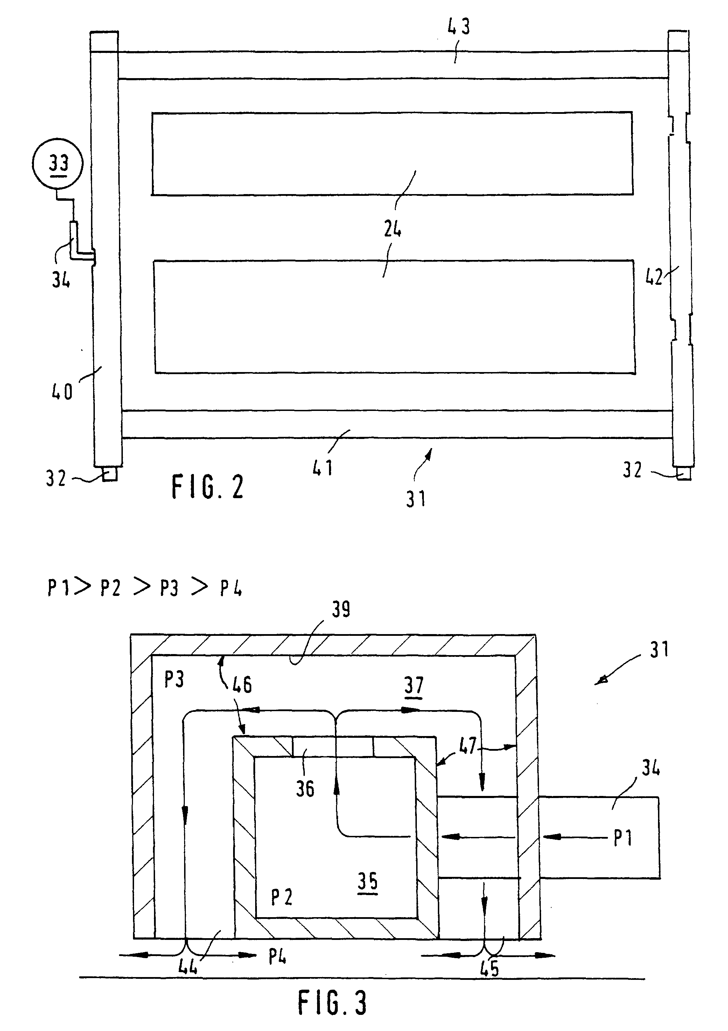

In den Figuren 1 und 2 ist ein über der Leiterplatte 12 angeordneter Gasverteiler 19 und ein unter der Leiterplatte 12, die Lotwelle 24 umgebender Gasverteiler 31 angeordnet. Der Gasverteiler 31 begast die Lotbadoberfläche und die Lotwellen 24. Der Gasverteiler 31 umschließt rahmenförmig eine oder beide Lotwellen 24. Das Ablaufen des Lotes wird durch diesen Gasverteiler 31 nicht beeinträchtigt. Der Gasverteiler 31 wird auf den Lotbehälter 22 abgelegt, wobei eine Seite des Gasverteilers 31 den Freiboard des Lotbehälters 22 nutzt und mit Auflageelement 32 unter einer Schräge so aufliegt, daß die Flachbaugruppen mit den zu verlötenden Baugruppen über den Gasverteiler 31 transportiert werden können. Der Gasverteiler 31 taucht nicht in das Lotbad ein. Über die Gasversorgung 33 und Gasversorgungsleitung 34 wird der Gasverteiler 31 mit einem nicht oxidierenden Gas versorgt.

In Figur 3 ist ein Schnitt durch den rahmenförmigen Gasverteiler 31 schematisch dargestellt, wobei gleiche Bauteile mit gleichen Bezugsziffern versehen sind.

Der Gasverteiler weist eine erste Entspannungskammer 35 auf, die mit der Gasversorgungsleitung 34 verbunden ist. Über die Gasversorgungsleitung 34 gelangt von der Gasversorgung 33 Schutzgas in die erste Entspannungskammer 35. Die Gasversorgungsleitung 34 ist als flexible, hitzebeständige Schlauchleitung, beispielsweise aus Teflon, ausgebildet. Die erste Entspannungskammer 35 besitzt Einzelöffnungen 36, die in einer zum Eingang der Gasversorgungsleitung 34 im wesentlichen rechtwinkligen Richtung ausgebildet sind und das Schutzgas um im wesentlichen 90° versetzt zur Strömungs - bzw. Eintrittsrichtung des Schutzgases in die zweite Entspannungskammer 37 bzw. in die weiteren Entspannungskammern leiten. Die zweite Entspannungskammer 37 wird zwischen einem die erste Entspannungskammer 35 umgebenden, U-förmigen Rahmen gebildet. Dabei ist die erste Entspannungskammer 35 in der zweiten Entspannungskammer 37 so angeordnet, daß die Öffnungen 36 der ersten Entspannungskammer 35 in Richtung zu den Flachbaugruppen 12 in die zweite Entspannungskammer münden. Durch die Versetzung des Schutzgases um nahezu 90° zur Strömungs- bzw. Eintrittsrichtung in die zweite Entspannungskammer 37 wird das Schutzgas nicht durch eine bestehende Strömung in die sich anschließende zweite Entspannungskammer 37 gezwungen, sondern aufgrund der sich aufbauenden Druckdifferenz P1 > P2 > P3. Dies hat den Vorteil, daß der Schutzgasstrom sich homogen über die gesamte Breite und Länge des Gasverteilers 31 verteilt. Beim Austritt durch die Öffnungen 36 der ersten Entspannungskammer 35 wird der Druck des Schutzgases reduziert und in die zweite Entspannungskammer entspannt.

Den Öffnungen 36 steht eine Seitenwand 39 der zweiten Entspannungskammer gegenüber, so daß der gerichtete und gebündelte Schutzgasstrom auf diese Wand 39 trifft und die Strömung somit gebrochen und auf den Raum der zweiten Entspannungskammer 37 verteilt wird. Dadurch erfolgt die Entspannung des Schutzgases, eine Reduzierung der Strömungsgeschwindigkeit und die Umwandlung von Strömungsenergie. Der gegenüber den Öffnungen 36 größere Strömungsquerschnitt in der zweiten Entspannungskammer 37 reduziert die Strömungsgeschwindigkeit des Schutzgases weiter.

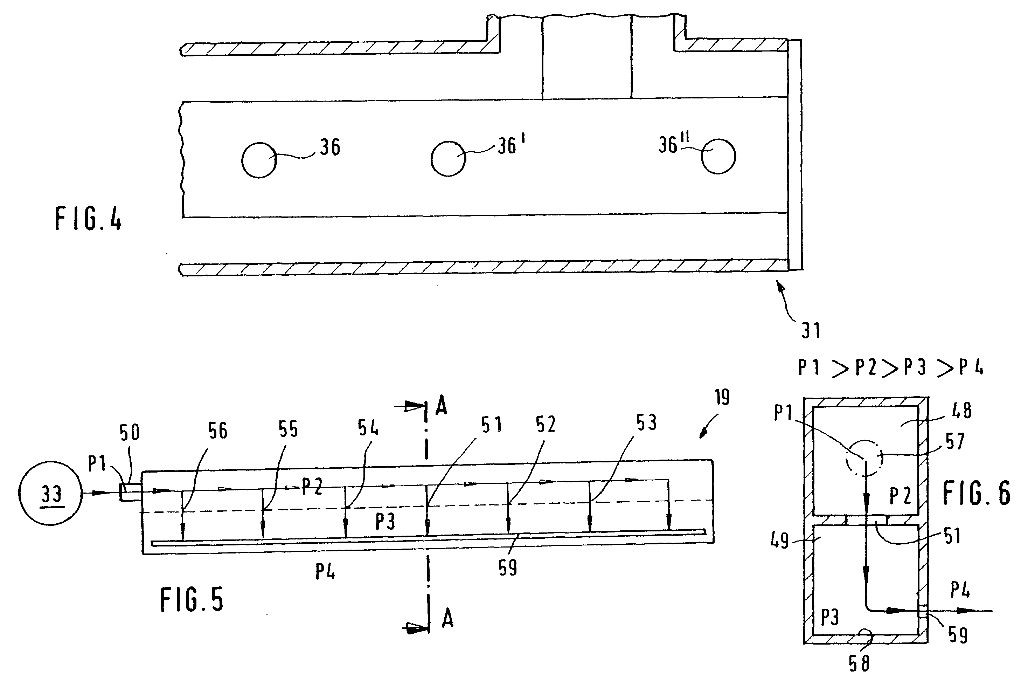

In Figur 4 ist schematisch ein Ausschnitt A der Figur 5 dargestellt. Der Gasverteiler 31 umgibt die Lotwelle 24 an vier Seiten, wobei jeder Arm 40, 41, 42, 43 (Figur 2) strömungstechnisch eine Entspannungskammer bildet, bei der die Anordnung der Öffnungen 36, 36' und 36", insbesondere deren Abstand, die Anzahl der Öffnungen 36, 36', 36" und deren Querschnitt strömungstechnisch so ausgebildet sind, daß eine homogene Verteilung über den gesamten Gasverteiler 31 erzielt wird. Inhomogenitäten in der Druckverteilung in der ersten Entspannungskammer 35 werden über die Verteilung der Anzahl und Größe der Öffnungen 36, 36', 36" ausgeglichen. Das entspannte und über den Gasverteiler 31 verteilte Schutzgas kann nun den Gasverteiler an der Unterseite, d. h. an der, zu der Leiterplatte entgegengesetzten Seite des Gasverteilers 31 über beidseitig zur ersten Entspannungskammer 35 angeordnete schlitzförmige Austrittsflächen 44, 45 verlassen. Die Austrittsflächen 44, 45 sind im Bezug auf die Strömungskanäle 46, 47 der zweiten Entspannungskammer 37 nicht verengt.

Das so gebildete Verdrängungsgaspolster verdrängt die den Gasverteiler umgebende Atmosphäre. Der gesamte Bereich des Lotbehälters 22 wird mit einem nicht oxidierenden Gas geflutet, ohne daß eine Vermischung mit der umgebende Atmosphäre stattfindet.

In Figur 5 ist der über den Flachbaugruppen 12 angeordnete Gasverteiler 19 schematisch dargestellt. Der Gasverteiler 19 besteht aus einer ersten Entspannungskammer 48 und mindestens einer weiteren Entspannungskammer 49. Die Versorgung der ersten Entspannungskammer 48 erfolgt über die Gasversorgungsleitung 50; die mit der Gasversorgung 33 verbunden ist. In der Versorgungsleitung 50 vorgesehene Armaturen sind nicht dargestellt und werden im folgenden auch nicht näher beschrieben. Die Gasversorgungsleitung 50 ist als Rohroder Schlauchleitung ausgebildet. Zwischen der ersten Entspannungskammer 48 und der zweiten Entspannungskammer 49 sind eine Vielzahl von Öffnungen 51 bis 56 vorgesehen, die die erste Entspannungskammer 48 mit der zweiten Entspannungskammer 49 verbinden. Der eintretende Schutzgasstrom wird in der ersten Entspannungskammer 48 entspannt. Diese Entspannungskammer 48 besitzt das für die Entspannung notwendige Volumen. Die Eintrittsöffnung 57 ist so ausgebildet und angeordnet, daß das Schutzgas über die gesamte Entspannungskammer 48 verteilt wird. Die in der ersten Entspannungskammer 48 vorgesehenen Öffnungen 51 bis 56 sind zum Eingang 57 der Gasversorgung 33 im wesentlichen rechtwinklig ausgebildet, so daß das Schutzgas um 90° versetzt zur Strömungs- bzw. Eintrittsrichtung in die weitere(n) Entspannungskammer(n) geleitet wird.

Beim Austritt durch die Öffnungen 51 bis 56 der ersten Entspannungskammer 48 wird der bereits in der ersten Entspannungskammer 48 reduzierte Druck P1 > P 2 des Schutzgases weiter reduziert, P1 > P2 > P3. Den Öffnungen 51 bis 56 steht eine Wand 58 der zweiten Enspannungskammer 49 gegenüber, so daß der durch die Öffnungen 51 bis 56 tretende gebündelte Schutzgasstrom auf diese Wand 58 trifft und der Schutzgasstrom gebrochen und im Raum der zweiten Entspannungskammer verteilt wird. Durch die großen Öffnungen 51 bis 56 wird die Ausbildung von gerichteten Strömungen weitgehend unterbunden.

Die zweite Entspannungskammer 49 weist ein Volumen auf, das eine Reduzierung der Strömungsgeschwindigkeit und des Druckes P2 > P3 erlaubt. In der zweiten Entspannungskammer 49 wird das Schutzgas beruhigt und homogen verteilt.

Ein zu den Öffnungen 51 bis 56 im wesentlichen rechtwinklig ausgebildete Austrittsfläche 59, die um ca. 90° zur Strömungsrichtung der Öffnungen 51 bis 56 der ersten Entspannungskammer angeordnet ist, dient zum Verlassen des Gasverteilers 19. Die schlitzförmige Austrittsfläche ist über die gesamte Länge des Gasverteilers ausgeführt und erzeugt ein Verdrängungsgaspolster, das nach dem Austritt aus dem Gasverteiler 19 den Abmessungen der schlitzförmigen Austrittsfläche 59 entspricht und sich nahezu nicht mit der umgebenden Atmosphäre vermischt.

Nach Veränderung der Entspannungskammervolumen und der Schlitzbreite wird der Gasverteiler 19 als Spaltdüse 10, 11, 14, 15, 27, 28, 29, 30 für die Gasvorhänge eingesetzt.

Beim Einsatz der Gasverteiler 19, 31 wird Schutzgas, insbesondere Stickstoff, den Gasverteilern 31 und 19 zugeführt. Das Schutzgas strömt in die erste Entspannungskammer 35, entspannt sich auf den Druck P2 und strömt durch die Öffnungen 36 in die zweite Entspannungskammer 37. Mit dem Druck P3 strömt das Schutzgas in Richtung der Lotoberfläche aus, erfährt hierbei eine weitere Druckreduzierung P4 und flutet den Bereich des Lötbehälters 22 und den Lotwellenbereich 24. Das Schutzgas wird durch das heiße Lotbad erwärmt und steigt auf. Durch die oberhalb der Flachbaugruppen an der Ummantelung 21 angebrachten Gasverteiler 19 strömt Schutzgas in Richtung des Lotbehälters 22. Damit wird dem aufsteigenden Verdrängungsgaspolster ein nach unten sich ausbreitendes Verdrängungsgaspolster entgegengesetzt, das eine Zirkulation weitgehend unterbindet. Dabei vermischen sich beide Verdrängungsgaspolster und es findet ein Temperaturausgleich statt.

## Patentansprüche

1. Lötvorrichtung zum Löten von Flachbaugruppen mit einer mindestens einen Lotbehälter (22) abdeckenden Ummantelung (17,20,21), durch die Flachbaugruppen (12) transportiert und während ihres Transportes mit einer Lotwelle (24) in Kontakt gebracht werden, und mit einer Gasverteilung zum Einlassen und Verteilen von einem nicht oxidierenden Gas in die Ummantelung (17,20,21),
**dadurch gekennzeichnet,**
**daß** die Gasverteilung mindestens einen oberhalb und mindestens einen unterhalb der durch den Transport der Flachbaugruppen (12) definierten Ebene angeordneten Gasverteiler (19, 31) aufweist, die beide mit Strömungsmitteln (35, 36, 37, 48, 49, 51-56) und mit zum Lotbehälter gerichteten Austrittsflächen (44,45,59) versehen sind, über welche Austrittsflächen (44,45,59) homogen verteilte Verdrängungsgaspolster ausgebildet werden.

2. Lötvorrichtung nach Anspruch 1
**dadurch gekennzeichnet,**
**daß** die Gasverteiler (19, 31) jeweils eine mit einer Gasversorgung (33) verbundene erste Entspannungskammer (35; 48) aufweisen, die über mindestens eine Öffnung (36, 51) mit mindestens einer weiteren Entspannungskammer (37, 49) verbunden ist, in der die Austrittsflächen (44, 45; 59) vorgesehen sind.

3. Lötvorrichtung nach Anspruch 1 oder 2
**dadurch gekennzeichnet,**
**daß** die Öffnungen (36, 51 bis 56) in einer zum Eingang (34; 57) der Gasversorgung (33) im wesentlichen rechtwinkligen Richtung ausgebildet sind.

4. Lötvorrichtung nach einem der Ansprüche 1 bis 3
**dadurch gekennzeichnet,**
**daß** die Austrittsflächen (44, 45; 59) in einer zu den Öffnungen (51 bis 56) im wesentlichen rechtwinkligen oder gegenüberliegenden Richtung ausgebildet sind.

5. Lötvorrichtung nach einem der Ansprüche 1 bis 4
**dadurch gekennzeichnet,**
**daß** zumindest einer der Gasverteiler (19) sich mindestens über die - in Transportrichtung der Flachgruppen gesehen - Länge des Lotbehälters (22) erstreckt.

6. Lötvorrichtung nach einem der Ansprüche 1 bis 5
**dadurch gekennzeichnet,**
**daß** zumindest einer der Gasverteiler (31) mindestens eine Lotwelle (24) umschließt.

7. Lötvorrichtung nach Anspruch 2 und Anspruch 6
**dadurch gekennzeichnet,**
**daß** die erste Entspannungskammer (35) mit Abstand in der zweiten Entspannungskammer (37) angeordnet ist und die Öffnung (36) der ersten Entspannungskammer (35) in Richtung zu den Flachbaugruppen (12) in die zweite Entspannungskammer (37) mündet.

8. Lötvorrichtung nach Anspruch 6 oder 7
**dadurch gekennzeichnet,**
**daß** die Austrittsfläche (44, 45) der zweiten Entspannungskammer (37) an der der Öffnung (36) gegenüberliegenden Seite ausgebildet ist.

9. Lötvorrichtung nach einem der Ansprüche 6 bis 8
**dadurch gekennzeichnet,**
**daß** die zweite Entspannungskammer (37) U-förmig ausgebildet ist und die Austrittsfläche (44, 45) an der offenen Seite durch die erste Entspannungskammer (35) begrenzt ist.

10. Lötvorrichtung nach einem der Ansprüche 6 bis 9
**dadurch gekennzeichnet,**
**daß** die Austrittsfläche (44,45) eines der Gasverteiler (31) so über dem Lotbehälter (22) angeordnet ist, daß ein in Richtung des Lotbehälters (22) aus der Austrittsfläche (44, 45) austretendes Verdrängungsgaspolster über dem Lotbad eine thermische Umlenkung erfährt.

## Claims

1. Soldering apparatus for soldering flat subassemblies, comprising at least one enclosure (17, 20, 21) which covers at least one solder container (22), through which flat subassemblies (12) are transported and, during their transport, are brought into contact with a solder wave (24), and comprising a gas distribution system for letting a non-oxidizing gas into the enclosure (17, 20, 21) and distributing it,
**characterized in that**
the gas distribution system has at least one gas distributor (19, 31) arranged above and at least one gas distributor arranged below the plane defined by the transport of the flat subassemblies (12), both gas distributors (19, 31) being provided with flow means (35, 36, 37, 48, 49, 51-56) and outlet areas (44, 45, 59) directed towards the solder container, via which outlet areas (44, 45, 59) homogeneously distributed displacement gas cushions are formed.

2. Soldering apparatus according to Claim 1,
**characterized in that**
the gas distributors (19, 31) in each case have a first expansion chamber (35; 48) which is connected to a gas supply (33) and which is connected via at least one opening (36, 51) to at least one further expansion chamber (37, 49), in which the outlet areas (44, 45; 59) are provided.

3. Soldering apparatus according to Claim 1 or 2,
**characterized in that**
the openings (36, 51 to 56) are formed in a direction substantially at right angles to the inlet (34; 57) of the gas supply (33).

4. Soldering apparatus according to one of Claims 1 to 3,
**characterized in that**
the outlet areas (44, 45; 59) are formed in a direction substantially at right angles to or opposite the openings (51 to 56).

5. Soldering apparatus according to one of Claims 1 to 4,
**characterized in that**
at least one of the gas distributors (19) - as viewed in the transport direction of the flat assemblies [sic] - extends at least over the length of the solder container (22).

6. Soldering apparatus according to one of Claims 1 to 5,
**characterized in that**
at least one of the gas distributors (31) encloses at least one solder wave (24).

7. Soldering apparatus according to Claim 2 and Claim 6,
**characterized in that**
the first expansion chamber (35) is arranged at a distance in the second expansion chamber (37), and the opening (36) in the first expansion chamber (35) opens into the second expansion chamber (37) in the direction of the flat subassemblies (12).

8. Soldering apparatus according to Claim 6 or 7,
**characterized in that**
the outlet area (44, 45) of the second expansion chamber (37) is formed on the side opposite the opening (36).

9. Soldering apparatus according to one of Claims 6 to 8,
**characterized in that**
the second expansion chamber (37) is of U-shaped design and the outlet area (44, 45) is bounded on the open side by the first expansion chamber (35).

10. Soldering apparatus according to one of Claims 6 to 9,
**characterized in that**
the outlet area (44, 45) of one of the gas distributors (31) is arranged above the solder container (22) in such a way that a displacement gas cushion emerging from the outlet area (44, 45) in the direction of the solder container (22) experiences thermal deflection over the solder bath.

## Revendications

1. Dispositif de soudage destiné à souder des sous-ensembles plats, comprenant une enceinte (17, 20, 21) recouvrant au moins un récipient de soudure (22), à travers laquelle les sous-ensembles plats (12) sont transportés et sont mis en contact avec une vague de soudure (24) pendant leur transport, et une distribution du gaz destinée à introduire et répartir un gaz non oxydant dans l'enceinte (17, 20, 21),
**caractérisé en ce que**
la distribution de gaz présente au moins un distributeur de gaz (19, 31) disposé au-dessus et au moins un disposé au-dessous du plan défini par le transport des sous-ensembles plats (12), et qui sont munis tous deux d'agitateurs d'écoulement et de surfaces de sortie (44, 45, 59) dirigées vers le récipient de soudure, surfaces de sortie (44, 45, 59) au moyen desquelles des matelas de gaz de déplacement sont formés et répartis de façon homogène.

2. Dispositif de soudage selon la revendication 1,
**caractérisé en ce que**
les distributeurs de gaz (19, 31) présentent chacun une première chambre de détente (35 ; 48) reliée à une alimentation en gaz (33) par au moins une ouverture (36, 51) à une autre chambre de détente (37, 49) dans laquelle les surfaces de sortie (44, 45 ; 59) sont prévues.

3. Dispositif de soudage selon la revendication 1 ou 2,
**caractérisé en ce que**
les ouvertures (36, 51 à 56) sont formées dans une direction sensiblement perpendiculaire à l'entrée (34 ; 57) de l'alimentation en gaz (33).

4. Dispositif de soudage selon une des revendications 1 à 3,
**caractérisé en ce que**
les surfaces de sortie (44, 45, 59) sont formées dans une direction sensiblement perpendiculaire ou opposée aux ouvertures (51 à 56).

5. Dispositif de soudage selon une des revendications 1 à 4,
**caractérisé en ce que**
au moins un des distributeurs de gaz (19) s'étend au moins sur la longueur du récipient de soudure (22), vu dans la direction du transport des sous-ensembles plats.

6. Dispositif de soudage selon une des revendications 1 à 5,
**caractérisé en ce que**
au moins un des distributeurs de gaz (31) entoure au moins une vague de soudure (24).

7. Dispositif de soudage selon la revendication 2 et la revendication 6,
**caractérisé en ce que**
la première chambre de détente (35) est disposée avec un certain écartement dans la deuxième chambre de détente (37), et l'ouverture (36) de la première chambre de détente (35) débouche dans la deuxième (37) en direction des sous-ensembles plats (12).

8. Dispositif de soudage selon la revendication 6 ou 7,
**caractérisé en ce que**
la surface de sortie (44, 45) de la deuxième chambre de détente (37) est formée au niveau du côté qui fait face à l'ouverture (36).

9. Dispositif de soudage selon une des revendications 6 à 8,
**caractérisé en ce que**
la deuxième chambre de détente (37) est réalisée en forme de U et la surface de sortie (44, 45) est limitée sur le côté ouvert par la première chambre de détente (35).

10. Dispositif de soudage selon une des revendications 6 à 9,
**caractérisé en ce que**
la surface de sortie (44, 45) d'un des distributeurs de gaz (31) est disposée au-dessus du récipient de soudure (22) de telle manière qu'un matelas de gaz de déplacement qui sort par la surface de sortie (44, 45) en se dirigeant vers le récipient de soudure (22) subisse une déviation thermique.
